# FASCICULE DE BREVET EUROPEEN

(11) **EP 2 921 277 B1**
(45) Date de publication et mention de la délivrance du brevet: **16.11.2016**
(21) Numéro de dépôt: 15151081.5
(22) Date de dépôt: 14.01.2015
(51) Int. Cl.: B29C 45/14, B29L 31/30, B29K 105/20, B60R 21/16

(54) **Procédé pour réaliser un panneau de véhicule destiné à recouvrir un module de coussin gonflable**
Verfahren zur Herstellung eines Fahrzeugpaneels, das dazu bestimmt ist, ein Airbag- Modul abzudecken
Method for producing a vehicle panel intended for covering an airbag module

(30) Priorité: 19.03.2014 FR 1452255
(43) Date de publication de la demande: 23.09.2015
(73) Titulaire: Faurecia Intérieur Industrie, 92000 Nanterre (FR)
(72) Inventeur: Marchetto, Gérald, 27950 Saint Just (FR); Bonneau, Marc, 95650 Boissy L'aillerie (FR)
(74) Mandataire: Cabinet Plasseraud

(56) Documents cités:
- WO-A1-98/31530
- WO-A1-2005/090048
- DE-A1-102010 053 106
- DATABASE WPI Week 199403 Thomson Scientific, London, GB; AN 1994-022326 XP002731193, -& JP H05 329878 A (TOYODA GOSEI KK) 14 décembre 1993 (1993-12-14)
- DATABASE WPI Week 199541 Thomson Scientific, London, GB; AN 1995-316595 XP002731194, -& JP H07 214593 A (TOYODA GOSEI KK) 15 août 1995 (1995-08-15)

## Description

### Domaine de l'invention

L'invention concerne un procédé pour réaliser un panneau de véhicule destiné à recouvrir un module de coussin gonflable.

### Contexte de l'invention

Il est usuellement connu de réaliser un panneau de véhicule en matériau plastique comprenant une portion destinée à constituer une trappe s'ouvrant sous la pression du coussin gonflable lors de son déploiement. Le panneau est généralement constitué par une coiffe de planche de bord. Le panneau peut également être constitué notamment par un panneau de porte pour recouvrir un coussin gonflable latéral, un panneau inférieur de planche de bord pour recouvrir un coussin gonflable de protection de genou.

Il est également connu, notamment du document WO98/31530 A, de renforcer le panneau au moyen d'un filet noyé dans la matière plastique, de manière à éviter notamment que des débris du panneau ne soient projetés dans l'habitacle lors de l'ouverture de la trappe et que l'effort de déploiement du coussin gonflable soit dispersé dans la déformation du panneau.

Ce document divulgue en outre de disposer une portion du filet de renforcement pliée en deux dans une fente ménagée dans le moule. Cette portion n'est pas recouverte de matière plastique, de sorte que le panneau réalisé présente localement une boucle libre dans le filet de renforcement. Cette boucle permet de faciliter l'ouverture de la trappe et évite que l'ouverture de la trappe soit insuffisante ou que le déploiement du coussin gonflable n'engendre des contraintes élevée sur le filet pouvant conduire à sa rupture et par conséquent à la projection de la trappe vers le(s) passager(s) du véhicule.

### Exposé de l'invention

L'invention vise à proposer un procédé pouvant être aisément automatisé pour une production en série, permettant une ouverture aisée de la trappe lors du déploiement du coussin gonflable et procurant un maintien de la trappe sur le panneau grâce au filet de renforcement.

Pour ce faire, conformément à l'invention, le procédé comprend les opérations suivantes :
a) on utilise un filet de renforcement et un ensemble de moulage, l'ensemble de moulage comprenant une première partie de moulage, une deuxième partie de moulage et un élément de mise en forme, l'élément de mise en forme présentant une forme effilée et étant mobile entre une position saillante et une position rétractée,
b) on place l'élément de mise en forme en position saillante et on forme une portion en U dans le filet de renforcement avec l'élément de mise en forme inséré dans la portion en forme de U du filet de renforcement,
c) on déplace l'élément de mise en forme dans la position rétractée, afin de libérer un espace allongé dans portion en forme de U du filet de renforcement,
d) on introduit de la matière plastique dans une cavité de moulage de l'ensemble de moulage s'étendant entre la première partie et la deuxième partie, ladite cavité de moulage incluant ledit espace allongé, et on emprisonne ainsi la portion en forme de U du filet de renforcement dans la matière plastique.

Ainsi, le procédé est aisément automatisable, dans la mesure où le positionnement du filet est bien maitrisé. En outre, le filet de renforcement étant emprisonné dans la matière plastique, y compris dans la portion en forme de U, le mouvement d'ouverture de la trappe est bien maitrisé. Lors du déploiement du coussin gonflable, la trappe pivote sensiblement à l'endroit où le filet de renforcement présente la portion en forme de U. La matière plastique dans laquelle est noyée la portion en forme de U peut se casser sans se disloquer, ce qui réduit les contraintes dans le filet de renforcement sans risquer de projeter des débris dans l'habitacle.

Selon une autre caractéristique conforme à l'invention, de préférence la portion en forme de U comporte une base, une première branche et une deuxième branche, l'étape b) comprend les opérations suivantes :
b1) on met en forme la base et la première branche de la portion en forme de U dans le filet de renforcement, puis
b2) on met en forme la deuxième branche dans le filet de renforcement.

La réalisation en deux étapes successives de la portion en forme de U permet d'une part de mieux maitriser le positionnement du filet de renforcement et d'autre part de réduire le risque de détérioration du filet de renforcement, laquelle serait d'autant plus problématique qu'elle n'est généralement pas visible sur le panneau réalisé.

Selon une caractéristique complémentaire conforme à l'invention, de préférence lors de la sous-étape b2), on met en forme la deuxième branche dans le filet de renforcement en déplaçant la deuxième partie de moulage vers la première partie de moulage.

Ainsi, le filet de renforcement est mis en forme lors de la fermeture de l'ensemble de moulage, de sorte que cela n'augmente pas le temps de réalisation du panneau.

Selon encore une autre caractéristique conforme à l'invention, de préférence l'ensemble de moulage comprend en outre une partie de manipulation et le procédé comprend les opérations suivantes :
- on déplace la partie de manipulation vers la première partie de moulage, puis
- on maintient le filet de renforcement sur la première partie de moulage, puis
- on écarte la partie de manipulation de la première partie de moulage, puis
- on déplace la deuxième partie de moulage vers la première partie de moulage.

La partie de manipulation est avantageusement une pièce relativement légère et peu encombrante. De préférence, la partie de manipulation est déplacée par un robot. Ainsi, le filet de renforcement est mis en place de manière aisée et fiable.

Selon une caractéristique complémentaire conforme à l'invention, de préférence lors de la sous-étape b1), on met en forme la base et la première branche dans le filet de renforcement en déplaçant la partie de manipulation vers la première partie de l'ensemble de moulage.

Ainsi, le filet de renforcement est mis en forme lorsque la partie de manipulation est déplacée vers la première partie de moulage, de sorte que cela n'augmente pas sensiblement le temps de réalisation du panneau.

Selon une autre caractéristique complémentaire conforme à l'invention, de préférence le procédé comprend les opérations suivantes :
- lors de l'étape a) on dispose le filet de renforcement sur la partie de manipulation et on retient le filet de renforcement de manière libérable, puis
- on libère le filet de renforcement de la partie de manipulation et on écarte la partie de manipulation de la première partie de moulage.

Ainsi, le positionnement du filet de renforcement est correctement maitrisé.

Selon une autre caractéristique conforme à l'invention, de préférence le procédé comprend les opérations suivantes :
- on fait passer une tige de maintien à travers le filet de renforcement pour maintenir le filet de renforcement sur la première partie de moulage,
- puis, on escamote la tige de maintien dans la première partie de moulage avant l'étape d).

Le positionnement du filet est ainsi bien maitrisé pour un coût d'outillage maitrisé.

Selon une caractéristique complémentaire conforme à l'invention, de préférence le procédé comprend les opérations suivantes :
- lors de l'étape b), on fait passer l'élément de mise en forme à travers un orifice de la première partie de moulage pour amener l'élément de mise en forme en position saillante,
- on fait passer ladite tige de maintien dans ledit orifice avant de traverser le filet de renforcement, puis
- lors de l'étape c), l'élément de mise en forme et ladite tige de maintien libèrent (au moins partiellement) ledit orifice, puis
- on amène un obturateur dans ledit orifice, de sorte que lors de l'étape d) l'obturateur délimite localement la cavité de moulage.

La mise en oeuvre du procédé est ainsi simplifiée, tout en permettant d'obtenir un panneau de qualité satisfaisante.

Enfin, selon une autre caractéristique conforme à l'invention, de préférence le procédé comprend les opérations suivantes :
- on utilise un ensemble de moulage comprenant un premier élément de mise en forme et un deuxième élément de mise en forme, chacun des premier élément de mise en forme et deuxième élément de mise en forme présentant une forme effilée et étant mobile entre une position saillante et une position rétractée,
- on maintient de manière libérable le filet de renforcement dans une zone de maintien située entre le premier élément de mise en forme et le deuxième élément de mise en forme, puis
- lors de l'étape b), on place le premier élément de mise en forme et le deuxième élément de mise en forme en position saillante et on forme une première portion en U et une deuxième portion en U dans le filet de renforcement avec le premier élément de mise en forme inséré dans la première portion en forme de U du filet de renforcement et le deuxième élément de mise en forme inséré dans la deuxième portion en forme de U du filet de renforcement,
- lors de l'étape c), on déplace le premier élément de mise en forme et le deuxième élément de mise en forme dans la position rétractée, afin de libérer un premier espace allongé dans la première portion en forme de U et un deuxième espace allongé dans la deuxième portion en forme de U du filet de renforcement,
- lors de l'étape d), on noie la première portion en forme de U et la deuxième portion en forme de U du filet de renforcement dans la matière plastique.

Ainsi, on peut réaliser le panneau avec une ouverture de frappe bien maitrisée, y compris lorsque le panneau est complexe, du fait notamment de l'ouverture de deux trappes lors du déploiement du coussin gonflable.

### Brève description des figures

D'autres caractéristiques et avantages de la présente invention apparaîtront dans la description détaillée suivante, se référant aux dessins annexés dans lesquels :
- FIG. 1 illustre une première étape du procédé, un filet de renforcement étant maintenu sur une partie de manipulation,
- FIG. 2 illustre une deuxième étape du procédé, le filet étant partiellement mis en forme entre la partie de manipulation et un élément de mise en forme,
- FIG. 3 illustre une troisième étape du procédé, le filet étant maintenu par une première partie de moulage et libéré de la partie de manipulation,
- FIG. 4 illustre une quatrième étape du procédé, le filet étant maintenu entre la première partie de moulage et une deuxième partie de moulage,
- FIG. 5 illustre une cinquième étape du procédé, le filet étant mis en forme finale entre la deuxième partie de moulage et l'élément de mise en forme, puis de la matière plastique est introduite entre la première partie de moulage et la deuxième partie de moulage.
- FIG. 6 illustre schématiquement en perspective une sixième étape du procédé, un panneau de véhicule comprenant le filet emprisonné dans la matière plastique étant obtenu pendant qu'un autre filet de renforcement est maintenu par la partie de manipulation pour réaliser un autre panneau.

### Description détaillée de l'invention

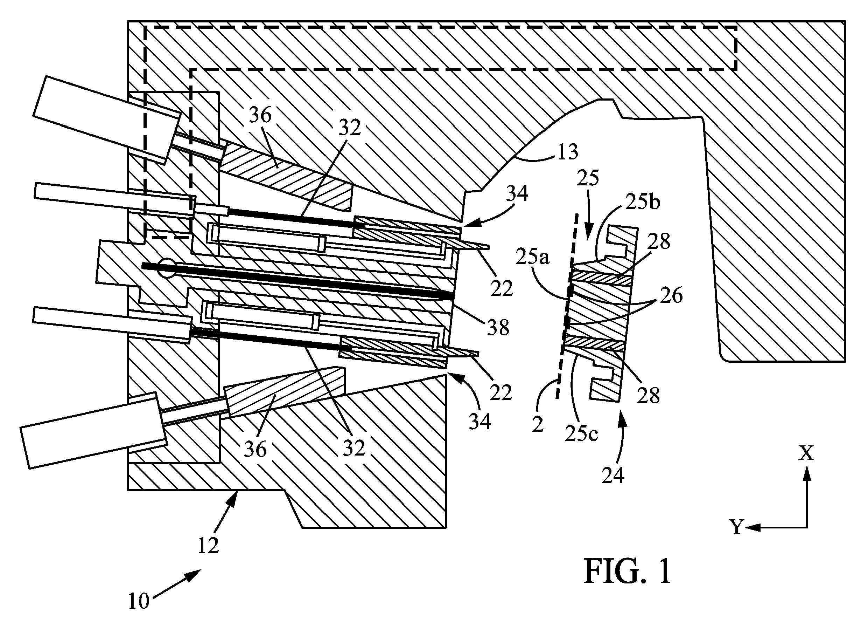

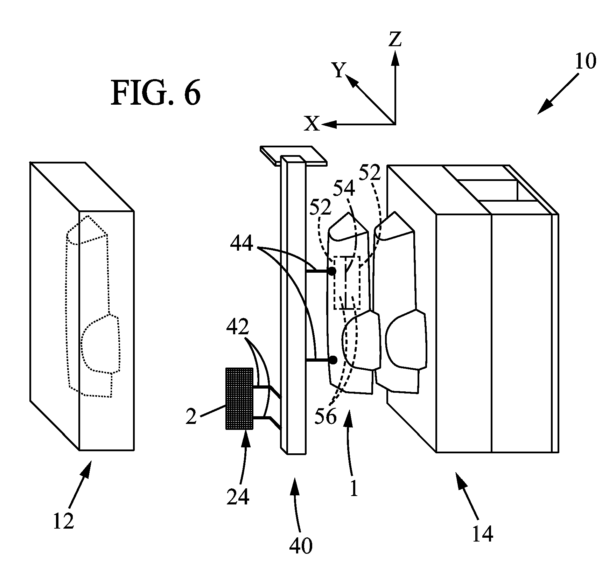

Les figures 1 à 6 illustrent des étapes successives de réalisation d'un panneau de véhicule automobile, plus précisément une coiffe (partie supérieure) de planche de bord 1, tel illustrée à la figure 6. La planche de bord 1 comprend deux zones de trappe 56 destinées à permettre le passage d'un coussin gonflage, chacune des zones de trappe 56 étant destinée à se rompre suivant une ligne de moindre résistance 54 représentée en trait mixte et à s'articuler autour d'une zone de charnière 52.

La figure 6 représente une direction longitudinale X, une direction transversale Y et une direction d'élévation Z. Il sera noté que la pesanteur agit suivant la direction d'élévation Z et donc que la coiffe de planche de bord n'est pas réalisée dans la position dans laquelle elle sera positionnée dans le véhicule.

La figure 6 illustre schématiquement un ensemble de moulage 10 comprenant une première partie de moulage 12 et une deuxième partie de moulage 14 écartées l'une de l'autre. Un manipulateur, dans le mode de réalisation illustré il s'agit plus précisément d'un robot manipulateur 40, vient saisir la coiffe de planche de bord 1 réalisée sur la deuxième partie de moulage 14 pour l'extraire du moule. Le robot manipulateur 40 comprend une première paire de bras 42 et une deuxième paire de bras 44. Pendant que la deuxième paire de bras 44 du robot porte la coiffe de planche de bord 1, la première paire de bras 42 porte une partie de manipulation 24 sur laquelle est maintenu un filet de renforcement 2.

La figure 1 illustre plus en détail, la première partie de moulage 12 et la partie de manipulation 24 portée par le robot 40. La partie de manipulation 24 présente une portion saillante 25 comportant une surface principale 25a plane s'étendant suivant la direction longitudinale X et la direction d'élévation Z et deux bords latéraux 25b, 25c sensiblement plans s'étendant sensiblement suivant la direction transversale Y et la direction d'élévation Z. Des zones de maintien 26 sont disposées dans la portion saillante 25, de préférence à proximité de la surface principale 25a. Des éléments de libération 28 sont disposés à proximité des zones de maintien 26. Dans le mode de réalisation illustré, il est représenté deux zones de maintien 26 et deux éléments de libération 28 distants l'un de l'autre suivant la direction transversale. Il sera noté qu'il pourrait être prévu une seule zone de maintien 26. Dans chaque zone de maintien, il peut être prévu des crochets flexibles, type Velcro® ou analogue, ou un adhésif destiné à maintenir de manière libérable le filet de renforcement sur l'élément de manipulation 24, ou plus généralement tout moyen analogue permettant de remplir la même fonction.

La première partie de moulage 12 constitue une matrice présentant une première surface de moulage 13. L'ensemble de moulage 10 comprend en outre deux éléments de mise en forme 22 portés par la première partie de moulage 12. Les éléments de mise en forme 22 présentent chacun une extrémité effilée s'étendant suivant la direction d'élévation Z avec une section de préférence sensiblement constante. Les éléments de mise en forme 22 sont mobiles dans le mode de réalisation illustré par rapport à la première partie de moulage 12, sous l'action de vérins, entre une position saillante illustrée à la figure 1 dans laquelle ils passent à travers des orifices 34 réalisé dans la première surface 13 et une position rétractée.

L'ensemble de moulage 10 comprend en outre des tiges de maintien 32 portées par la première partie de moulage 12. Les tiges de maintien 32 sont mobiles par rapport à la première partie de moulage 12, sous l'action de vérins dans le mode de réalisation illustré, entre une position active et une position inactive illustrée à la figure 1. Les tiges de maintien 32 sont disposées suivant deux séries de tiges se succédant suivant la direction d'élévation Z, de manière à ce que le filet de renforcement 2 puisse être bien maintenu sur toute son étendue suivant la direction d'élévation Z. En position active, les tiges de maintien passent à travers les orifices 34. Dans le mode de réalisation illustré, les tiges de maintien 32 coulissent dans les éléments de mise en forme 22.

L'ensemble de moulage 10 La première partie de moulage comprend en outre deux obturateurs 36 portés par la première partie de moulage 12. Les obturateurs 36 sont mobiles par rapport à la première partie de moulage 12, sous l'action de vérins dans le mode de réalisation illustré, entre une position reculée et une position d'obturation dans laquelle ils obturent les orifices 34 lorsque les éléments de mise en forme sont en position rétractée et les tiges de maintien sont en position inactive.

Enfin, l'ensemble de moulage 10 comprend une buse 38 d'injection de matière plastique portée par la première partie de moulage 12.

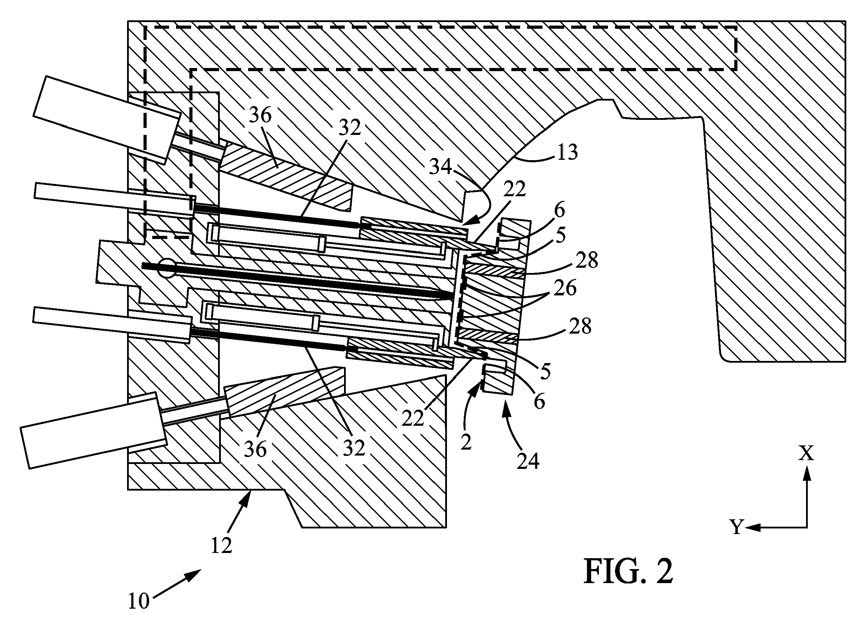

Tel qu'illustré aux figures 1 et 2, le filet de renforcement 2 est maintenu dans les zones de maintien 26 sur l'élément de manipulation 24, les éléments de mise en forme 22 sont en position saillante, les tiges de maintien 32 sont en position inactive, les obturateurs 36 sont en position reculée et l'élément de manipulation 24 est déplacé suivant la direction transversale Y vers la première surface de moulage 13.

Tel qu'illustré à la figure 2, la portion saillante 25 de l'élément de manipulation 24 se retrouve alors insérée entre les deux éléments de mise en forme 22. Deux parties du filet de renforcement 2 formant des premières branches 5 se retrouvent alors repliées entre les éléments de mise en forme 22 et les bords latéraux 25b, 25c de l'élément de manipulation 24. Deux autres parties du filet de renforcement 2, formant une base 6 à la suite des premières branches 5, sont repliées suivant la direction longitudinale X et s'étendent entre les éléments de mise en forme 22 et l'élément de manipulation 24.

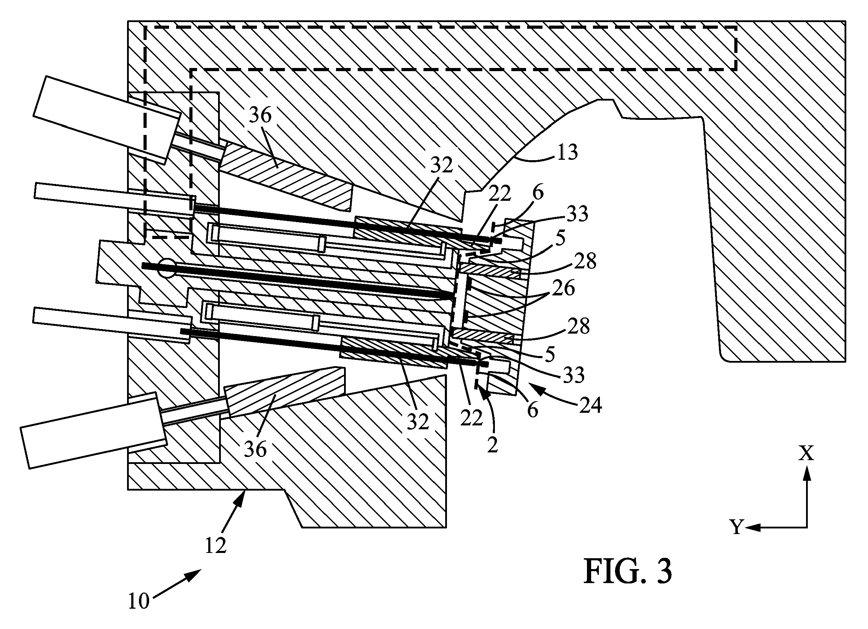

Tel qu'illustré à la figure 3, les tiges de maintien 32 sont ensuite amenées en position active de manière à passer à travers le filet de renforcement 2. Les tiges de maintien 32 présentent chacune une gorge 33 à proximité de leur extrémité libre pour éviter que le filet de renforcement 2 ne s'échappe inopinément. Les deux séries de tiges de maintien 32 maintiennent alors entre elles les premières branches 5 du filet de renforcement. Lorsque les deux séries de tiges de maintien 32 maintiennent le filet de renforcement, les éléments de libération 28 écartent le filet de renforcement 2 des zones de maintien 26 libérant ainsi le filet de renforcement 2 par rapport à l'élément de manipulation 24. Simultanément ou successivement, l'élément de manipulation 24 est éloigné de la première partie de moulage 12 suivant la direction transversale Y par le robot 40. Le filet de renforcement 2 est alors uniquement maintenu sur la première partie de moulage 12.

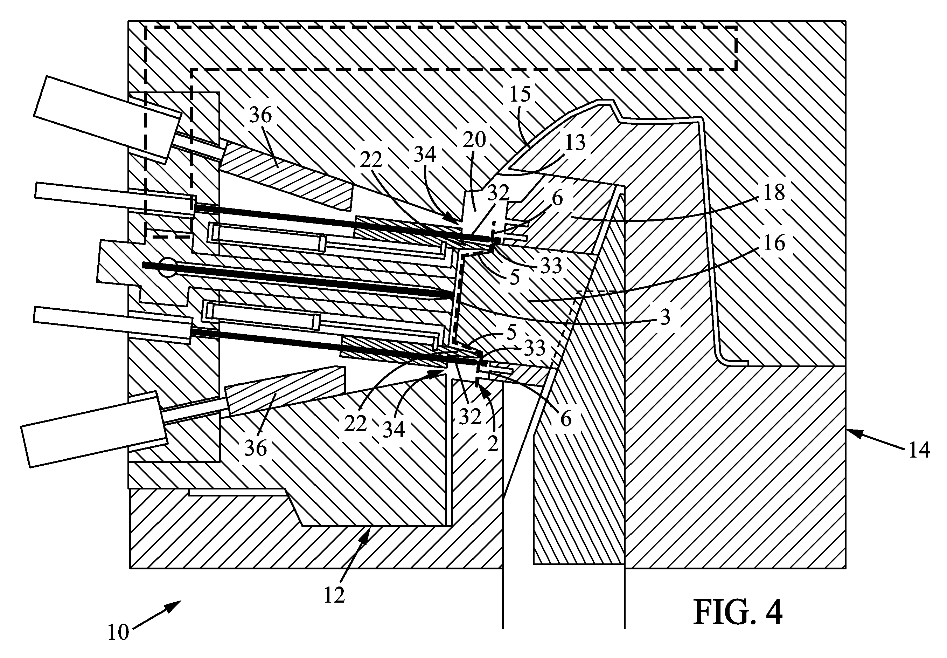

Tel qu'illustré à la figure 4, la deuxième partie de moulage 14 présente une deuxième surface de moulage 15 délimitant avec la première surface de moulage 13 une cavité de moulage 20. La deuxième partie de moulage 14 comprend un élément principal 16 et un élément périphérique 18 s'étendant autour de l'élément central 16.

Après avoir amené le deuxième élément de moulage 14 en regard du premier élément de moulage, l'élément principal 16 est avancé suivant la direction transversale Y vers la première surface de moulage 13. L'élément principal 16 présente une forme similaire à celle de l'élément de manipulation 24, en particulier la portion saillante définie par la surface principale et les deux bords latéraux. Le filet de renforcement 2, notamment les premières branches 5 et les bases 6 se positionnent donc en appui contre l'élément principal 16 de la deuxième partie de moulage 14.

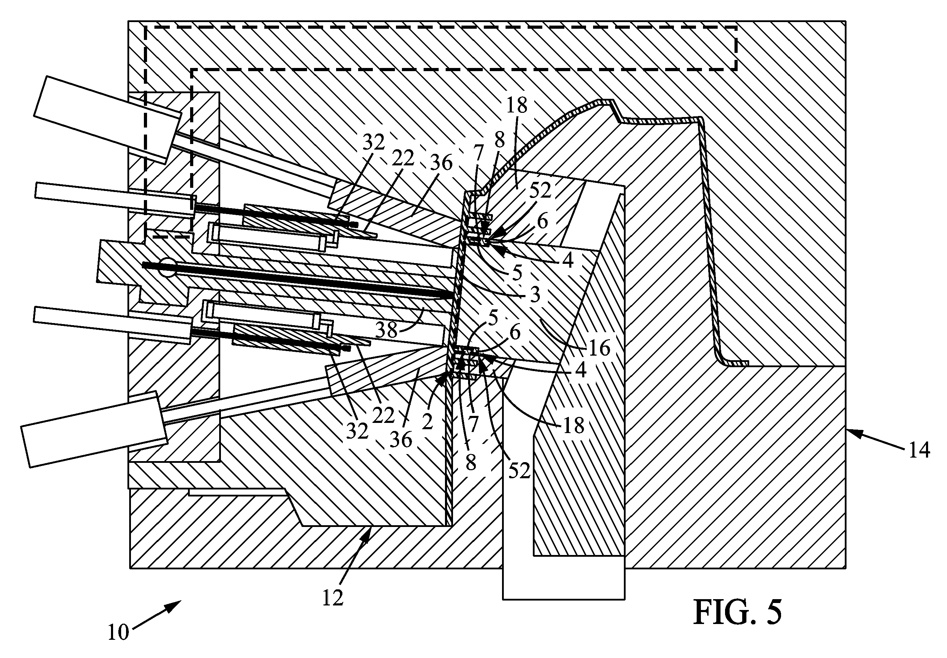

Tel qu'illustré à la figure 5, les tiges de maintien 32 sont alors déplacées en position inactive, de sorte que le filet de renforcement 2 est maintenu entre les éléments de mise en forme 22 et l'élément principal 16 de la deuxième partie de moulage 14. Ensuite ou simultanément, la partie périphérique 18 de la deuxième partie de moulage 14 est déplacée suivant la direction transversale Y vers la première partie de moulage 12, ce qui replie, contre les éléments de mise en forme 22, des deuxièmes branches 7 du filet de renforcement 2, à la suite des bases 6 et en regard des premières branches 5 respectives. Le filet de renforcement 2 présente alors deux portions en forme de U 4 comprenant chacune la première branche 5, la base 6 la deuxième branche 7, les éléments de mise en forme 22 étant inséré dans les portions en forme de U 4.

Les éléments de mise en forme 22 sont ensuite déplacés en position rétractée, à l'écart des portions en forme de U 4 et des orifices 34. Puis, les obturateurs 36 sont amenés en position d'obturation dans les orifices 34, délimitant ainsi une partie de la cavité de moulage 20.

Les portions en forme de U 4 sont ainsi disposées chacune dans un espace 8 de la cavité de moulage 20. Chacun des deux espaces 8 est allongé suivant la direction d'élévation Z et présente transversalement à la direction d'élévation Z une section sensiblement constante en forme de gorge, au fond de laquelle s'étend la base 6 du filet de renforcement 2.

De la matière plastique est alors introduite dans la cavité de moulage 20 par la buse d'injection 38, dans une zone située entre les deux espaces 8 et en regard de l'élément principal 16 de la deuxième partie de moulage 14. La matière plastique traverse le filet de renforcement 2. Le filet de renforcement 2, en particulier les portions en forme de U 4, se trouve emprisonné, dans la matière plastique.

Autrement dit, le filet de renforcement 2 est maintenu par la matière plastique, en particulier les portions en forme de U 4. De préférence, le filet de renforcement 2 est entièrement englobé dans la matière plastique, en d'autres termes le filet de renforcement est entièrement noyé dans la matière plastique et n'est pas visible de l'extérieur. Toutefois, même si cela n'apparaît pas préféré, il est possible de ne pas recouvrir complètement le filet de renforcement 2 de matière plastique et/ou de prévoir des zones dans lesquelles le filet n'est pas entièrement noyé dans la matière plastique.

Après refroidissement de la matière plastique, on obtient la coiffe de planche de bord 1 illustrée à la figure 6, tel que décrit précédemment. Les portions en forme de U 4 remplies de matière plastique constituent alors des nervures s'étendant dans les zones de charnière 52. Avantageusement, les lignes de moindre résistance 54 sont ensuite réalisées en entaillant la matière plastique et en découpant le filet de renforcement, selon des techniques connues telles que couteau chaud ou découpe laser.

Bien entendu l'invention n'est nullement limitée au(x) mode(s) de réalisation décrit(s) à titre illustratif, non limitatif. Ainsi, bien que cela ne soit pas préféré, la partie principale 16 de la deuxième partie de moulage 14 et l'élément de manipulation 24 pourraient être confondus en un unique élément. Autrement dit, le filet de renforcement 2 pourrait être positionné directement sur l'élément principal 16 de la deuxième partie de moulage 14.

## Revendications

1. Procédé pour réaliser un panneau de véhicule destiné à recouvrir un module de coussin gonflable, en particulier une planche de bord, lequel procédé comprenant les opérations suivantes :
a) on utilise un filet de renforcement (2) et un ensemble de moulage (10), l'ensemble de moulage (10) comprenant une première partie de moulage (12), une deuxième partie de moulage (14) et un élément de mise en forme (22), l'élément de mise en forme (22) présentant une forme effilée et étant mobile entre une position saillante et une position rétractée,
b) on place l'élément de mise en forme (22) en position saillante et on forme une portion en U (4) dans le filet de renforcement (2) avec l'élément de mise en forme (22) inséré dans la portion en forme de U (4) du filet de renforcement (2),
c) on déplace l'élément de mise en forme (22) dans la position rétractée, afin de libérer un espace allongé (8) dans la portion en forme de U (4) du filet de renforcement (2),
d) on introduit de la matière plastique (30) dans une cavité de moulage (20) s'étendant entre la première partie (12) et la deuxième partie (14) de l'ensemble de moulage (10), ladite cavité de moulage (20) incluant ledit espace allongé (8), et on emprisonne ainsi la portion en forme de U (4) du filet de renforcement (2) dans la matière plastique (30).

2. Procédé selon la revendication 1 dans lequel la portion en forme de U (4) comporte une base (6), une première branche (5) et une deuxième branche (7), et l'étape b) comprend les opérations suivantes :
b1) on met en forme la base (6) et la première branche (5) de la portion en forme de U (4) dans le filet de renforcement (2), puis
b2) on met en forme la deuxième branche (7) dans le filet de renforcement (2).

3. Procédé selon la revendication précédente dans lequel lors de la sous-étape b2), on met en forme la deuxième branche (7) dans le filet de renforcement (2) en déplaçant la deuxième partie de moulage (14) vers la première partie de moulage (12).

4. Procédé selon l'une quelconque des revendications 2 ou 3 dans lequel l'ensemble de moulage (10) comprend en outre une partie de manipulation (24) et le procédé comprend en outre les opérations suivantes :
- on déplace la partie de manipulation (24) vers la première partie de moulage (12), puis
- on maintient le filet de renforcement (2) sur la première partie de moulage (12), puis
- on écarte la partie de manipulation (24) de la première partie de moulage (12), puis
- on déplace la deuxième partie de moulage (14) vers la première partie de moulage (12).

5. Procédé selon la revendication précédente dans lequel lors de la sous-étape b1), on met en forme la base (6) et la première branche (5) dans le filet de renforcement en déplaçant la partie de manipulation (24) vers la première partie (12) de l'ensemble de moulage.

6. Procédé selon l'une quelconque des revendications 4 ou 5 dans lequel :
- lors de l'étape a) on dispose le filet de renforcement (2) sur la partie de manipulation (24) et on retient le filet de renforcement (2) de manière libérable, puis
- on libère le filet de renforcement (2) de la partie de manipulation (24) et on écarte la partie de manipulation (24) de la première partie de moulage (12).

7. Procédé selon l'une quelconque des revendications 4 à 6 dans lequel :
- on fait passer une tige de maintien (32) à travers le filet de renforcement (2) pour maintenir le filet de renforcement (2) sur la première partie de moulage (12), puis
- on escamote la tige de maintien (32) dans la première partie de moulage (12) avant l'étape d).

8. Procédé selon la revendication précédente dans lequel on réalise les opérations suivantes :
- lors de l'étape b), on fait passer l'élément de mise en forme à travers un orifice (34) de la première partie de moulage (12) pour amener l'élément de mise en forme (22) en position saillante,
- on fait passer ladite tige de maintien (32) dans ledit orifice (34) avant de traverser le filet de renforcement (2), puis
- l'élément de mise en forme (22) et ladite tige de maintien (32) libèrent ledit orifice (34), puis
- on amène un obturateur (36) dans ledit orifice (34), de sorte que lors de l'étape d) l'obturateur (36) délimite localement la cavité de moulage (20).

9. Procédé selon l'une quelconque des revendications 1 à 6 dans lequel on réalise les opérations suivantes :
- lors de l'étape b), on fait passer l'élément de mise en forme (22) à travers un orifice (34) de la première partie de moulage (12) pour amener l'élément de mise en forme (22) en position saillante,
- lors de l'étape c), l'élément de mise en forme (22) libère (au moins partiellement) ledit orifice (34), puis
- on amène un obturateur (36) dans ledit orifice, de sorte que lors de l'étape d) l'obturateur (20) délimite localement la cavité de moulage (30).

10. Procédé selon l'une quelconque des revendications précédentes dans lequel :
- on utilise un ensemble de moulage (10) comprenant un premier élément de mise en forme (22) et un deuxième élément de mise en forme (22), chacun des premier élément de mise en forme (22) et deuxième élément de mise en forme (22) présentant une forme effilée et étant mobile entre une position saillante et une position rétractée,
- on maintient de manière libérable le filet de renforcement (2) dans une zone de maintien (26) située entre le premier élément de mise en forme (22) et le deuxième élément de mise en forme (22), puis
- lors de l'étape b), on place le premier élément de mise en forme (22) et le deuxième élément de mise en forme (22) en position saillante et on forme une première portion en U (4) et une deuxième portion en U (4) dans le filet de renforcement (2) avec le premier élément de mise en forme (22) inséré dans la première portion en forme de U (4) du filet de renforcement et le deuxième élément de mise en forme (22) inséré dans la deuxième portion en forme de U du filet de renforcement (4),
- lors de l'étape c), on déplace le premier élément de mise en forme (22) et le deuxième élément de mise en forme (22) dans la position rétractée, afin de libérer un premier espace allongé (8) dans la première portion en forme de U (4) et un deuxième espace allongé (8) dans la deuxième portion en forme de U (4) du filet de renforcement (2), et
- lors de l'étape d), on emprisonne la première portion en forme de U (4) et la deuxième portion en forme de U (4) du filet de renforcement (2) dans la matière plastique (30).

## Patentansprüche

1. Herstellungsverfahren für Armaturenbrett zur Abdeckung eines Airbag-Moduls, insbesondere Armaturenbrett gemäß des Verfahrens, das folgende Schritte umfasst:
a) Verwendung eines Verstärkungsnetzes (2) und eines Formbausatzes (10), wobei der Formbausatz ein erstes Formbauteil (12), ein zweites Formbauteil (14) und ein Einbauteil (22) umfasst, wobei das Einbauteil (22) spitz zulaufend ist und beweglich zwischen einer vorstehenden und einer zurückgezogenen Stellung stehen kann,
b) Platzieren des Einbauteils (22) in einer vorstehenden Stellung und Bildung eines U-Teils (4) im Verstärkungsnetz (4) mit dem Einbauteil (22), welches in das U-Teil (4) des Verstärkungsnetzes (2) eingefügt wird,
c) Rückstellung des Einbauteils (22) in eine zurückgezogenen Stellung zur Freigabe des Längsraum (8) im U-Teil (4) des Verstärkungsnetzes (2),
d) Eintrag eines Kunststoffes (30) in eine Formöffnung (20) zwischen dem ersten Teil (12) und dem zweiten Teil (14) des Formbausatzes (10), wobei die genannte Formöffnung (20) den Längsraum (8) und die Bindung des U-Teils (4) des Verstärkungsnetzes (2) im Kunststoff (30) einschließt.

2. Verfahren gemäß Anspruch 1, in dem das U-Teil (4) eine Basis (6), einen ersten Zweig (5) und einen zweiten Zweig (7) umfasst, und den Schritt b) mit folgenden Schritten umfasst:
b1) Formgebung der Basis (6) und des ersten Zweigs (5), des U-Teils (4) im Verstärkungsnetz (2), dann
b2) Formgebung des zweiten Zweigs (7) im Verstärkungsnetz (2).

3. Verfahren gemäß des vorgehenden Anspruchs mit Unterschritt b2) und Formgebung des zweiten Zweigs (7) im Verstärkungsnetz (2) durch Verschiebung des zweiten Formbauteils (14) zum ersten Formbauteil (12).

4. Verfahren gemäß der Ansprüche 2 oder 3, wobei der Formbausatz (10) außerdem eine Handverstellteil (24) umfasst und das Verfahren folgende weitere Schritte umfasst:
- Verschieben des Handverstellteils (24) zum ersten Formbauteil (12), dann
- Festhalten des Verstärkungsnetzes (2) auf dem ersten Formbauteil (12), dann
- Verschieben des Handstellteils (24) vom ersten Formbauteil (12), dann
- Verschieben des zweiten Formbauteils (14) zum ersten Formbauteil (12).

5. Verfahren gemäß des vorhergehenden Anspruchs mit Unterschritt b1) zur Gestaltung der Basis (6) und des ersten Zweigs (5) im Verstärkungsnetz durch Verschieben des Handverstellteils (24) zum ersten Formbauteil (12) des Formbausatzes (10).

6. Verfahren gemäß einem der Ansprüche 4 oder 5 mit folgendem Inhalt:
- im Schritt a) erfolgt der Einbau des Verstärkungsnetzes (2) auf dem Handverstellteil (24) und die Anbringung des Verstärkungsnetzes (2) auf eine lösbare Weise, dann
- Freigabe des Verstärkungsnetzes (2) vom Handverstellteil (24) und Verschieben des Handverstellteils (24) vom ersten Formbauteil (12).

7. Verfahren gemäß einem der Ansprüche 4 bis 6 mit:
- Einpassen eines Haltestifts (32) durch das Verstärkungsnetz (2) zum Halten des Verstärkungsnetzes (2) am ersten Formbauteil (12), dann
- Der Haltestift (32) lässt sich in das erste Formbauteil (12) vor Schritt d) einbauen.

8. Verfahren gemäß des vorhergehenden Anspruchs mit Durchführung folgender Schritte:
- in Schritt b) erfolgt die Einbringung des Formgebers durch eine Öffnung (34) im ersten Formbauteil (12) zur Einstellung des Einbauteils (22) in eine vorstehenden Stellung,
- Einbringen des genannten Haltestifts (32) in der genannten Öffnung (34) zum Verstärkungsnetz (2), dann
- Freigeben des Einbauteils (22) und des genannten Haltestifts (32) an der genannten Öffnung (34), dann
- Anbringen eines Verschlusses (36) auf die genannte Öffnung (34), so dass in Schritt d) der Verschluss (36) die Formöffnung (20) lokal begrenzt.

9. Verfahren gemäß einem der Ansprüche 1 bis 6 gemäß folgender Schritte:
- in Schritt b) erfolgt die Einbringung des Einbauteils (22) über eine (15) Öffnung (34) des ersten Formbauteils (12) zur Anbringung des Formbauteils (22) in eine vorstehenden Stellung,
- in Schritt c) erfolgt die Freigabe des Einbauteils (22) (zumindest teilweise) aus der genannten Öffnung (34), dann
- Anbringen eines Verschlusses (36) auf die genannte Öffnung (34), so dass in Schritt d) der Verschluss (36) lokal die Formöffnung (20) abdeckt.

10. Verfahren gemäß eines der vorhergehenden Ansprüche:
- Verwenden eines Formbausatzes (10) mit einem ersten Einbauteil (22) und einem zweiten Einbauteil (22), wobei jedes Formbauteil (22) spitz zulaufend ist und beweglich zwischen einer vorstehenden und einer zurückgezogenen Stellung stehen kann,
- Aufrechterhalten des Verstärkungsnetzes (2) in einer Haltezone (26), die zwischen dem ersten Einbauteil (22) und den zweiten Einbauteil (22) gelegen ist,
- In Schritt b) erfolgt die Einsetzung des ersten Einbauteils (22) und des zweiten Einbauteils (22) in eine vorstehenden Stellung und die Bildung eines ersten U-Teils (4) und eines zweiten U-Teils (4) im Verstärkungsnetz (2) mit dem ersten Einbauteil (22) bei Einbau im ersten U-Teil (4) des Verstärkungsnetzes (2) und dem zweiten Einbauteil (22) bei Einbau im zweiten U-Teil des Verstärkungsnetzes (2),
- in Schritt c) erfolgt die Verschiebung des ersten Einbauteils (22) und des zweiten Einbauteils (22) in eine zurückgezogene Stellung zum Freistellen des ersten Längsraums (8) im ersten U-Teil (4) und ein zweiter Längsraum (8) im zweiten U-Teil (4) des Verstärkungsnetzes (2) und
- in Schritt d) kommt es zum Einschließen des ersten U-Teil (4) und des zweiten U-Teil (4) des Verstärkungsnetzes (2) im Kunststoff (30).

## Claims

1. A method for producing a vehicle panel intended for covering an airbag module, in particular a dashboard, the method comprising the following operations:
a) a reinforcement net (2) and a mold assembly (10) are used, the mold assembly (10) comprising a first mold part (12), a second mold part (14) and a shaping element (22), the shaping element (22) presenting a slender shape and being mobile between a projecting position and a retracted position,
b) the shaping element (22) is placed in the projecting position and a U-shaped portion (4) is formed in the reinforcement net (2) with the shaping element (22) inserted in the U-shaped portion (4) of the reinforcement net (2),
c) the shaping element (22) is displaced in the retracted position, to release an elongated space (8) in the U-shaped portion (4) of the reinforcement net (2),
d) plastic material (30) is introduced into a mold cavity (20) extending between the first part (12) and the second part (14) of the mold assembly (10), said mold cavity (20) including said elongated space (8), and the U-shaped portion (4) of the reinforcement net (2) is thereby enclosed in the plastic material (30).

2. The method according to claim 1 in which the U-shaped portion (4) comprises a base (6), a first branch (5) and a second branch (7), and step b) comprises the following operations:
b1) the base (6) and the first branch (5) of the U-shaped portion (4) is shaped in the reinforcement net (2), and then
b2) the second branch (7) is shaped in the reinforcement net (2).

3. The method according to the previous claim in which, in sub-step b2), the second branch (7) is shaped in the reinforcement net (2) by displacing the second mold part (14) towards the first mold part (12).

4. The method according to any one of claims 2 or 3 in which the mold assembly (10) also comprises a handling part (24) and the method also comprises the following operations:
- the handling part (24) is displaced towards the first mold part (12), and then
- the reinforcement net (2) is held on the first mold part (12), and then
- the handling part (24) is moved away from the first mold part (12), and then
- the second mold part (14) is displaced towards the first mold part (12).

5. The method according to the previous claim in which, in sub-step b1), the base (6) and the first branch (5) are shaped in the reinforcement net by displacing the handling part (24) towards the first part (12) of the mold assembly.

6. The method according to any one of claims 4 or 5, in which:
- in step a) the reinforcement net (2) is applied to the handling part (24) and the reinforcement net (2) is releasably retained, and then
- the reinforcement net (2) is released from the handling part (4) and the handling part (24) is moved away from the first mold part (12).

7. The method according to any one of claims 4 to 6, in which:
- a holding rod (32) is passed through the reinforcement net (2) to maintain the reinforcement net (2) on the first mold part (12), and then
- the holding rod (32) is retracted into the first mold part (12) before step d).

8. The method according to the previous claim in which the following operations are carried out:
- in step b), the shaping element is passed through an opening (34) in the first mold part (12) to bring the shaping element (22) to a projecting position,
- said holding rod (32) is passed into said opening (34) before traversing the reinforcement net (2), and then
- the shaping element (22) and said holding rod (32) release said opening (34), and then
- a stopper (36) is brought into said opening (34), such that in step d) the stopper (36) locally delimits the mold cavity (20).

9. The method according to any one of claims 1 to 6 in which the following operations are carried out:
- in step b), the shaping element (22) is passed through an opening (34) in the first mold part (12) to bring the shaping element (22) to a projecting position,
- in step c), the shaping element (22) releases (at least partially) said opening (34), and then
- a stopper (36) is brought into said opening, such that in step d) the stopper (20) locally delimits the mold cavity (30).

10. The method according to any one of the previous claims, in which:
- a mold assembly (10) comprising a first shaping element (22) and a second shaping element (22) is used, each of the first and second shaping elements (22) presenting a slender shape and being mobile between a projecting position and a retracted position,
- the reinforcement net (2) is releasably maintained in the maintenance zone (26) situated between the first shaping element (22) and the second shaping element (22), and then
- in step b), the first shaping element (22) and the second shaping element (22) are placed in the projecting position and a first U-shaped portion (4) and a second U-shaped portion (4) are formed in the reinforcement net (2) with the first shaping element (22) inserted in the first U-shaped portion (4) of the reinforcement net and the second shaping element (22) inserted in the second U-shaped portion of the reinforcement net (4),
- in step c), the first shaping element (22) and the second shaping element (22) are displaced in the retracted position, in order to release a first elongated space (8) in the first U-shaped portion (4) and a second elongated space (8) in the second U-shaped portion (4) of the reinforcement net (2), and
- in step d), the first U-shaped portion (4) and the second U-shaped portion (4) of the reinforcement net (2) are enclosed in the plastic material (30).
